# EUROPEAN PATENT APPLICATION

(11) **EP 2 023 102 A1**
(43) Date of publication of application: **11.02.2009**
(21) Application number: 07113956.2
(22) Date of filing: 07.08.2007
(51) Int. Cl.: G01G 23/01, G01G 19/22, G01F 13/00, G01F 25/00, B01F 13/10, B01F 15/04, B01F 5/24, B01F 15/00, B01F 3/18

(54) **Process and device for processing granular material mixtures**

(71) Applicant: Moretto S.P.A., 35010 Massanzago (Padova) (IT)
(72) Inventor: Moretto, Renato, 35010, Massanzago - Padua (IT)
(74) Representative: Reniero, Cirillo Silvano

(57) **Abstract**

The present invention relates to a metering process of a number of granular materials comprising the steps of:
a) initial calibration of a multiple metering device (DM) including the steps of:
- loading a number of granular materials to be metered into respective hoppers or silos (T₁, T₂, ..., Tₙ), each equipped with a respective extractor device (DE₁, DE₂, ..., DEₙ) making up part of the multiple metering device (DM);
- separately driving each of the extractor devices (DE₁, DE₂, ..., DEₙ), each associated with a respective hopper (T₁, T₂, ..., Tₙ), whereby carrying out a pre-established number of opening-closing steps in the time unit thereby obtaining a corresponding amount of extracted granular material;
- weighing the amount of granular material extracted by each extractor device (DE₁, DE₂, ..., DEₙ);
- inserting weight data for each granular material to be metered into a program control unit (CPU) for the calculation of the opening-closing period (P₁, P₂, ..., Pₙ) of each extractor device (DE₁, DE₂, ..., DEₙ) based on desired percentages of each granular material to be metered, for the obtainment of a final mixture with desired composition; and subsequently

b) cyclic execution of the following sequential steps:
- sending control signals processed by the program control unit (CPU) as a function of said periods of extractor opening-closing (DE₁, DE₂, ..., DEₙ) for the extraction of an metered amount of the respective granular material to be treated by at least two extractor devices (DE₁, DE₂, ..., DEₙ);
- collecting, in a holding container (CP), the metered amounts of each granular material thus extracted; and
- detecting, by means of sensor means (MS), a pre-established filling threshold of the holding container (CP) thereby stopping the at least two extractor devices (DE₁, DE₂, ..., DEₙ) upon attainment of the pre-established filling threshold.

## Description

The present invention regards a device and a process for processing mixtures of a number of granular materials, in particular granules of plastics material.

Before being subjected to a process of transformation or reuse, the plastics materials, upon reduction or grinding into granules or flakes of desired granulometry or size, are added with other granular or powder materials, typically granular (ground) or powder plastics materials and, if needed, small or very small quantities of one or more additives, typically colorant powder, a lubricant agent and the like, as is well known to a man skilled in the art of plastics material transformation. The metering devices or dosing apparatuses of granular materials, both of volumetric and gravimetric type, which are currently available on the market result unsatisfactory above all from the standpoint of metering precision.

The volumetric dosing apparatuses in general consist of a containment container of granular material to be metered and a motorized screw feeder set to dispense or extract granular material from the container. The amount dispensed in the unit of time or batch of granular material extracted by the screw depends on the rotation time, the rotation speed and on the size of the screw. The batches coming from different granular material containers fall into a mixer-homogenizer device or mixer. The usable mixers can be of various types: horizontal, vertical, fountain and overflow, all intended to closely mix together the different quantities of granular plastics materials and possible additives so to obtain the most uniform mixture possible.

The gravimetric dosing apparatuses have two or more flanking storage hoppers, which are set to feed granular material by gravity to an underlying weighing hopper, which is in turn intended to discharge the material fed therein into an underlying mixing/homogenization hopper. Typically, the feeding, weighing and mixing/homogenization operations are controlled by a program electronic control unit.

The dosing apparatuses proposed up to now, nevertheless, while satisfactory from many standpoints, have drawbacks which are due in particular to the use of a mixer or stirrer. There exist, in fact, granular material transformation processes in which the hourly quantity of granular plastics material mixture to be transformed is relatively low, less than 20 kg/hour and for which the percentage amounts of additive can be very small, on the order of 0.2-0.3%.

The dosing machines currently available on the market are in general made for very high productions, typically greater than 50 kg/hour of mixture to be fed to a transformation machine of the granular plastics material, e. g. an injection press, arranged downstream of the dosing apparatus. Moreover, the amount of material contained in the mixer is usually closely tied to the productive capacity of the dosing apparatus. It follows that, when the transformation machine requires low hourly quantities of plastics material mixture, the mixture quantity waiting to be consumed by the machine remains in the mixer for a relatively long time period, sometimes equal to or greater than 30 minutes. During this waiting period, due to the different nature and different granulometries of the mixed granular materials and hence different specific weight of the same, the mixture undergoes demixing. In other words, the materials with greater specific weight are separated from the other components of the mixture, with consequent creation of non-uniformity in the mixture and worsening of the chemical-physical characteristics of the final product molded by the transformation machine. The vibrations transmitted by the transformation machine also significantly favor the spontaneous demixing of the granular materials present in the mixture.

The main object of the present invention is to provide a new process for the metering of granular material to apply to those dosing devices of said granular material which can be utilized without the use of a mixer.

Another object of the present invention is to provide a metering process of said granular material capable of making a uniform mixture and a higher precision metering with respect to the current state of the art.

A further object of the present invention is to provide a granular material metering process applicable to respective metering devices in a flexible manner and at competitive production costs.

Another object of the present invention is to provide a multiple metering device of granular material capable of carrying out metering for very low percentages, less than 0.2% for each metered granular material.

These and other objects which will be better appear below are attained with a metering process of a number of granular materials comprising the steps of:
a) initial calibration of a multiple metering device including the steps of:
   - loading a number of granular materials to be metered into respective hoppers or silos, each one equipped with a respective extractor device being part of said multiple metering device;
   - separately driving each of said extractor devices, each associated with a respective hopper, whereby carrying out a predetermined number of opening-closing steps in the unit of time, to obtain a corresponding quantity of extracted granular material;
   - weighing said quantity of granular material extracted by said extractor device;
   - inserting weight data for each granular material to be metered into a program control unit for reckoning an opening-closing period of each extractor device based on the desired percentages of each granular material to be metered for the obtainment of a final mixture with desired composition; and subsequently
b) cyclic execution of the following sequential steps:
   - sending of control signals processed by said program control unit as a function of said extractor opening-closing periods for the extraction of a metered quantity of the respective granular material to be treated by at least two extractor devices;
   - collecting, in a holding container, said metered quantities of each granular material thus extracted; and
   - detecting, by means of sensor means, a pre-established filling threshold of said holding container, thereby stopping said at least two extractor devices upon reaching said pre-established filling threshold.

According to another aspect of the present invention, a multiple metering device of granular material is provided to implement the abovementioned process, comprising a plurality of loading hoppers of a respective granular material to be metered equipped with a respective extractor device and a program electronic control unit intended to control said extractor devices, and characterized in that it comprises at least one conveyance zone, set to receive metered amounts of different granular materials from said extractor devices, at least one holding container set downstream of said conveyance zone and intended to receive metered amounts of granular material from said conveyance zone and to dispense it to a user unit, and sensor means set to control the attainment of a pre-established level in said at least one holding container in order to send a control signal to said program electronic control unit upon attainment of said pre-established level.

Further aspects and advantages of the present invention will be clearer from the following detailed description of a currently preferred embodiment thereof, illustrated as merely exemplifying and non-limiting examples in the accompanying drawings, in which
- Figure 1 illustrates a perspective view with parts removed and in section of a multiple metering device for the carrying out the process according to the present invention;
- Figure 2 is a block diagram which broadly illustrates the operative sequence of the process according to the present invention;
- Figure 3 is a detailed flow diagram of the final steps of the block diagram of Fig. 2; and
- Figures 4a, 4b and 4c illustrate the opening-closing functions with respect to time of three dispenser devices of the same number of hoppers containing different granular materials for the obtainment of a mixture with different percentages of the respective granular materials.

With reference to the above-listed Figures, it will be noted how a process for the preparation of mixtures of granular material according to the present invention can be made by means of a multiple metering device DM, which is formed by a plurality of upper hoppers, removably installable in the same number of housing seats delimited by a fixed support frame TL. In the drawing, three hoppers T1, T2 and T4, are illustrated, the hopper T3 having been omitted to better illustrate the internal part of the multiple metering device DM, it being understood that the multiple metering device can comprise a number of hoppers which is greater or less than four.

The hoppers T1 - T4 can have the same size or different sizes from each other according to requirements and are intended to contain a respective granular material to be transformed, typically a virgin granular plastics material or a ground scrap or sprue material in the form of rough pieces or a colorant and/or another granular additive to be added in a metered manner to another or other granular materials.

Every hopper T1 - T4 is equipped with a lower discharge mouth interceptable by a respective extractor-dosing device DE₁ - DE₄ of any suitable type, preferably an extractor-dosing apparatus formed by an oscillator rotor of the type described in the patent US-6 9816 19 B2 in the name of the same applicant of the present application. One such extractor-dosing device DE₁ - DE₄ is therefore preferably constituted by an oscillating rotor controllable by a linear actuator AL of any suitable type, to dispense metered amounts of material contained in the respective overlying hopper.

Optionally, the extractor device DE₁ - DE₄ according to one particular advantageously variant thereof can be composed of a "eyelid" mechanism, as described in the patent US-7 137 729 B2 in the name of the same applicant of the present invention, which by repeatedly and rapidly opening and closing dispenses by gravity, in a pre-established fraction (thousandth) of a second, a predetermined amount of granular material with a very high precision.

Below the discharge mouth of each hopper T1 - T4, a conveyance zone ZC is provided with sloped walls converging towards an underlying holding container CP of any suitable type to convey the granular material extracted by the hoppers T1 - T4 therein by gravity. The holding container CP is preferably composed of a duct delimited between two terminal flanges: upper FA and lower FB, respectively, fixed in use to a lower flange FI of the conveyance zone ZC and to an attachment flange FMT of a transformer machine or press of plastic granular material (not shown in the drawings).

Level sensor means MS are advantageously provided for, at the holding container CP, e. g. constituted by a radar probe or by a pair of photocells, which are preferably adjustably locatable at different levels along the holding container CP and are set to detect the attainment of a predetermined mixture level of granular materials conveyed in the holding container CP. Once the mixture of granular materials has reached the pre-established level, the level sensor means MS will send an input signal to a program electronic control unit CPU, which will send a control signal to the extractor devices DE₁ - DE₄, thereby interrupting the dispensing of further granular material. The dispensing will automatically restart as soon as the mixture level of granular material in the holding container CP descends below the pre-established threshold level.

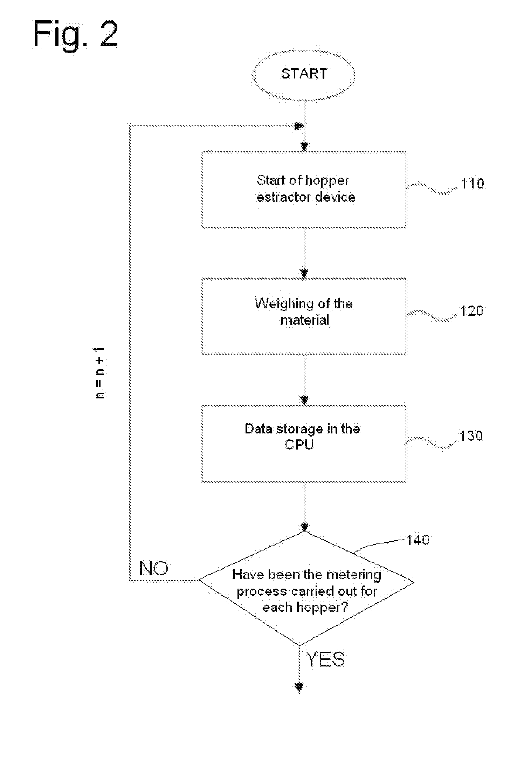

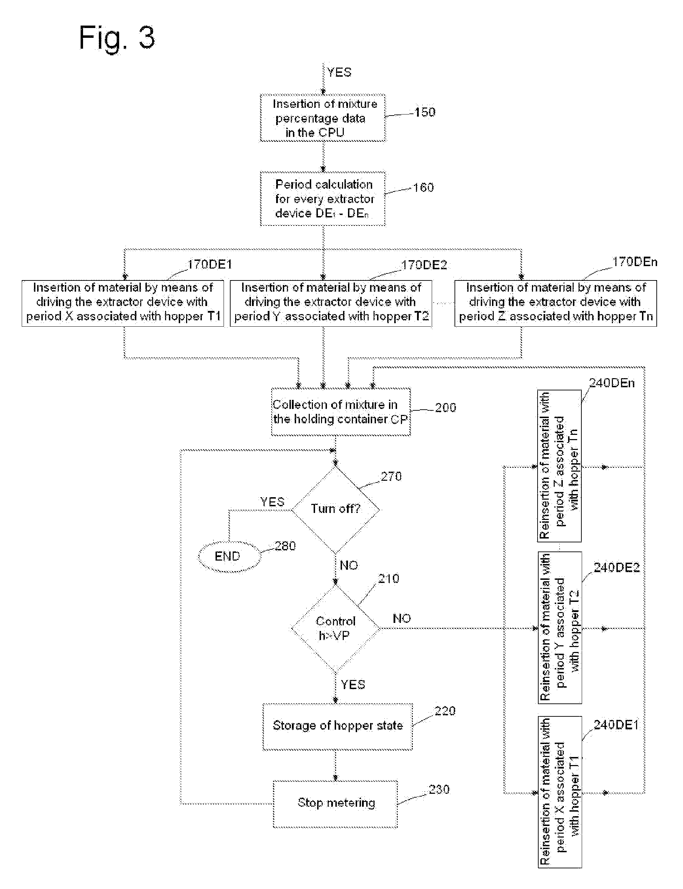

In Figure 2, a flow diagram is illustrated related to a preliminary calibration step of the multiple dosing device DM, while in Figure 3 a block diagram shows the various steps of the metering and mixing process according to the present invention.

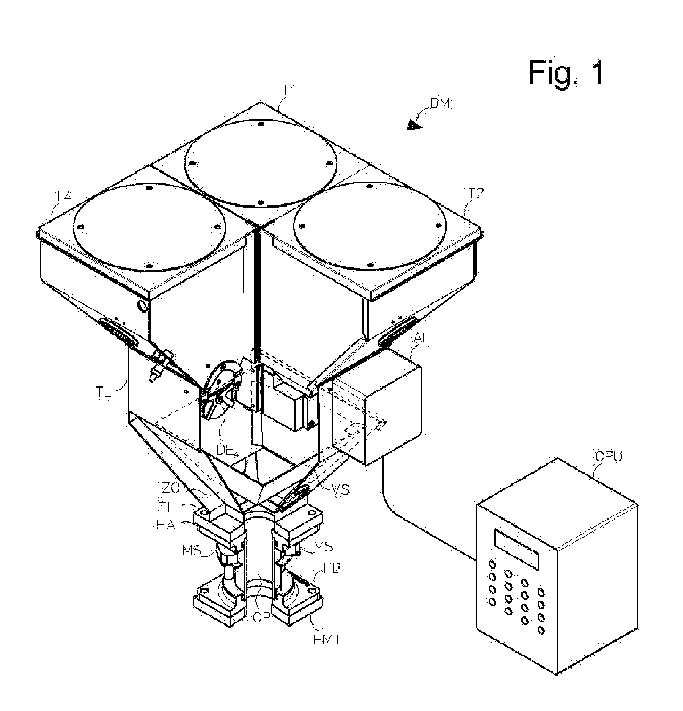

At the beginning, in the preliminary calibration or set-up step, the operator manually prearranges a tray container VS (Figure 1) in the conveyance zone ZC. He then starts the extractor device DE₁ associated with the hopper T1, which contains a first granular material to be metered. The extractor device DE₁ has its predetermined cyclic opening-closing period (block 110) in a predetermined time interval.

The quantity of granular material extracted from the containment hopper T1 and transferred into the container VS is weighed (block 120) on weighing means, such as a high-precision electronic weighing balance of any suitable type, placed outside the multiple metering device DM. The weight value is then stored (block 130) in the program control unit CPU. The operation is repeated (block 140) for the remaining hoppers T2 - T4 containing the other materials to be metered.

Once the calibration step has terminated, the operator stores, in the program control unit CPU, the data (block 150 - Fig. 3) regarding the required percentage of each granular material contained in a respective containment hopper T1 - T4 so to be able to obtain a desired mixture of granular materials, as well as the desired hourly production (e. g. expressed in kg/hour) of mixture by the multiple metering device DM.

Once the percentage is known of each granular material which must be present in the desired mixture, the program control unit CPU calculates (block 160) the cyclic period of every opening-closing operation of each extractor device DE₁ - DE₄ of the hoppers T1 - T4, maintaining the opening time interval constant, in a manner such that the opening-closing period of every extractor device DE₁ - DE₄ is directly proportional to the respective percentage of each granular material to be metered for obtainment of the desired mixture. An actual example of calculation of the cyclic opening-closing operation associated with each extractor device will be reported in more detail below.

The subsequent step consists of sending a signal processed by the program electronic control unit CPU to all or some of the extractor devices DE₁ - DE₄, which will be energized (blocks 170DE₁, 170DE₂, ..., 170DEₙ) to be opened and closed with a respective period X, Y, ... , Z correlated with the specific percentage of the granular material extracted by each of these and which must be present in the desired mixture. The material extracted by all or part of the hoppers T1, T2, ..., Tn is collected in the conveyance zone ZC and discharged into the holding container CP (block 200), where the level sensors MS are in operation. If the height of the mixture level exceeds a pre-established value VP (block 210), the program control unit PCU will store the state of each extractor device (block 220) so to immediately stop (block 230) all extractor devices DE₁, DE₂, ..., DEₙ.

As soon as the granular material mixture level contained in the holding container CP descends below the pre-established level VP, each extractor device will be activated (blocks 240DE₁, 240DE₂, ..., 240DEₙ), starting again from the previously stored state, so to continue the opening-closing sequence with the same period, X, Y, ..., Z, respectively, of the previously interrupted step (blocks 170DE₁, 170DE₂, .., 170DEₙ). The end of the process can be manually controlled by the operator, who can turn off the multiple metering device DM (blocks 270 and 280), e. g. by pressing a suitable stop button (not shown in the drawings).

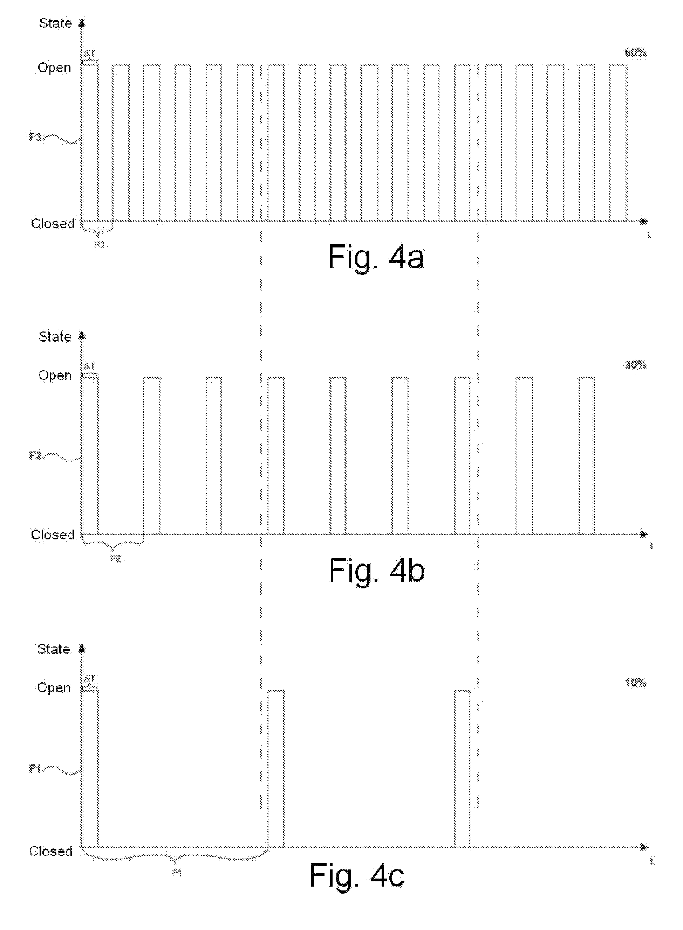

In the diagrams illustrated in Figures 4a - 4c, an example is illustrated of opening-closing periods associated with three extractor devices DE₁ - DE₃ each set to dispense a respective granular material in the percentages of 60%, 30% and 10%, respectively, into the final mixture. More particularly, it will be noted how a function F1 (Figure 4c) associated with the extractor device DE₁ associated with the hopper T1 containing a granular material to be metered in the percentage equal to 10% has a period P1 three times greater than the period of the function F2 (Figure 4b) associated with the extractor device DE₂ associated with the hopper T2 containing a granular material to be metered in the percentage equal to 30%, while the function F2 in turn has a period P2 which is twice the period P3 of the function F3 (Fig. 4a) associated with the extractor device DE₃ associated with the hopper T3 containing a granular material to be metered in the percentage equal to 60% of the final mixture.

Two dashed lines parallel to the y axes indicate an interruption in the operation of the extractor devices DE₁ - DE₃ following the attainment of the predetermined threshold level of mixture collected in the holding container CP. It will be noted how the functions F1 - F3 associated with the extractor devices DE₁ - DE₃, after every operation interruption, start again from the state which immediately preceded the interruption, so to continue the programmed opening and closing sequence with the same period. In other words, upon interruption of each extractor device DE₁ - DE₃, i.e. at the attainment of the pre-established level in the holding container CP, the program electronic control unit CPU stores the state and the precise instant corresponding with the stored opening-closing cycle state previously carried out by each dispenser device DE₁ - DE₃. With the lowering of the mixture level in the holding container (CP), each dispenser device DE₁ - DE₃ is reactivated by the program electronic control unit (CPU) so to restart to carry out the same number of opening-closing cycles already previously executed in the pre-established time interval or period P, thus maintaining continuity in the metering and mixing process.

In the example illustrated in Figs. 4a-4c in the functions F1 - F3 associated with the same number of extractor devices, the time interval ΔT of the extractor device opening is maintained constant. If desired, it is possible to vary this parameter as well, by substituting the calculation algorithm of the percentages of the various granular materials forming the final mixture, thereby obtaining a mixture with a desired composition.

With the process according to the present invention, it is possible to obtain a precise metering and a mixing of static type of various granular materials, without the use of a special mechanical mixing device for the granular materials themselves, thus drastically reducing the demixing problems during the dwell time of the mixture in the holding container CP, problems which instead occur when the mixture is stirred with a mixing device.

To confer further flexibility to the system, as well as for the obtainment of a more energetic mixing of the various granular materials which form the final mixture, a phase displacement Δt can be provided for between the functions F1, F2, ..., Fn associated with the various extractor devices DE₁, DE₂, ..., DEₙ, as will be easy to understand by a man skilled in the art.

Moreover, if one uses extractor devices DE₁, DE₂, ..., DEₙ having a constant opening time, the program control unit CPU, when the interruption due to having attained the filling level in the holding container CP coincides with the opening instant of one or more of the extractor devices DE₁, DE₂, ..., DEₙ, will delay the interruption of the extractor devices themselves by a time interval such that those extractor devices which are found in the opening step complete the dispensing of the material. Consequently, the interruption will occur when all extractor devices DE₁, DE₂, ..., DEₙ are found in the closed step.

The present invention, as described above, is susceptible to numerous modifications and variants within the protective scope as defined by the following claims.

## Claims

1. A metering process of a number of granular materials comprising the steps of:
a) initial calibration of a multiple metering device (DM) including the steps of:
- loading a number of granular materials to be metered into respective hoppers or silos (T₁, T₂, ..., Tₙ), each equipped with a respective extractor device (DE₁, DE₂, ..., DEₙ) making up part of said multiple metering device (DM);
- separately driving each of said extractor devices (DE₁, DE₂, ..., DEₙ), each associated with a respective hopper (T₁, T₂, ..., Tₙ), whereby carrying out a pre-established number of opening-closing steps in the time unit thereby obtaining a corresponding amount of extracted granular material;
- weighing said amount of granular material extracted by each extractor device (DE₁, DE₂, ..., DEₙ);
- inserting weight data for each granular material to be metered into a program control unit (CPU) for the calculation of the opening-closing period (P₁, P₂, ..., Pₙ) of each extractor device (DE₁, DE₂, ..., DEₙ) based on desired percentages of each granular material to be metered, for the obtainment of a final mixture with desired composition; and subsequently
b) cyclic execution of the following sequential steps:
- sending control signals processed by said program control unit (CPU) as a function of said periods of extractor opening-closing (DE₁, DE₂, ..., DEₙ) for the extraction of an metered amount of the respective granular material to be treated by at least two extractor devices (DE₁, DE₂, ..., DEₙ);
- collecting, in a holding container (CP), said metered amounts of each granular material thus extracted; and
- detecting, by means of sensor means (MS), a pre-established filling threshold of said holding container (CP) thereby stopping said at least two extractor devices (DE₁, DE₂, ..., DEₙ) upon attainment of said pre-established filling threshold.

2. A process according to claim 1, **characterized in that** it comprises the step of automatically restarting at least two of said extractor devices (DE₁, DE₂, ..., DEₙ) once the granular material mixture level in said holding container (CP) has fallen below said pre-established threshold level.

3. A process according to claim 1 or 2, **characterized in that** it comprises the steps of:
- storing, upon the stop of each extractor device (DE₁, DE₂, ..., DEₙ), the precise instant and state of each dispenser device (5); and
- reactivating at least two extractor devices (DE₁, DE₂, ..., DEₙ), by said program control unit (CPU), to continue the same opening-closing sequence already previously executed in the respective opening-closing time intervals or periods (P₁, P₂, ..., Pₙ).

4. A process according to any one of the previous claims, **characterized in that** it comprises a time phase displacement between said opening-closing periods (P₁, P₂, ..., Pₙ) associated with a respective extractor device (DE₁, DE₂, ..., DEₙ).

5. A process according to any one of the preceding claims, **characterized in that** it comprises a delay time in the interruption of said extractor devices (DE₁, DE₂, ..., DEₙ), when the same extractor devices have a constant opening time and when the interruption due to the attainment of the filling level in said holding container (CP) occurs in the opening instant of one or more extractor devices (DE₁, DE₂, ..., DEₙ), whereby those extractor devices (DE₁, DE₂, ..., DEₙ) which are found in the opening step complete the material dispensing.

6. A multiple metering device of granular materials for carrying out the process according to any one of the claims 1 - 5, comprising a plurality of loading hoppers (T₁, T₂, ..., Tₙ) of a respective granular material to be metered equipped with a respective extractor device (DE₁, DE₂, ..., DEₙ) and a program electronic control unit (CPU) intended to control said extractor devices (DE₁, DE₂, ..., DEₙ), **characterized in that** it comprises at least one conveyance zone (ZC), set to receive metered amounts of different granular materials from said extractor devices (DE₁, DE₂, ..., DEₙ), at least one holding container (CP) arranged downstream of said conveyance zone (ZC) and intended to receive metered amounts of granular materials from said conveyance zone (ZC) to dispense them to a user unit, and sensor means (MS) set to control the attainment of a pre-established level in said at least one holding container (CP) thereby sending a control signal to said program electronic control unit (CPU) upon attainment of said pre-established level.

7. A metering device according to claim 6, **characterized in that** each extractor device (DE₁, DE₂, ..., DEₙ) is a cyclic opening-closing device.

8. A device according to claim 6 or 7, **characterized in that** said level sensor means (MS) comprises at least one pair of sender-receiver means arranged on opposite sides of and outside said at least one holding container (CP).
